# EUROPÄISCHE PATENTANMELDUNG

(11) **EP 2 631 154 A2**
(43) Veröffentlichungstag der Anmeldung: **28.08.2013**
(21) Anmeldenummer: 13154325.8
(22) Anmeldetag: 07.02.2013
(51) Int. Cl.: B62D 1/16, B62D 5/00

(54) **Vorrichtung zur Gabe eines haptisch erfahrbaren Signals auf eine Lenkwelle eines Fahrzeugs**

(30) Priorität: 27.02.2012 DE 102012202895
(71) Anmelder: Schaeffler Technologies AG & Co. KG, 91074 Herzogenaurach (DE)
(72) Erfinder: Hofmann, Alexander, 91056 Erlangen (DE); Hierl, Stefan, 92348 Berg (DE)

(57) **Zusammenfassung**

Die Erfindung betrifft eine Vorrichtung (1) zur Gabe eines haptisch erfahrbaren Signals auf eine Lenkwelle (3) eines Fahrzeugs, gekennzeichnet durch einen hydraulischen Kreislauf umfassend eine Pumpe und ein ansteuerbares Drosselelement, wobei die mit der Lenkwelle (3) bewegungsgekoppelte Pumpe bei Drehung der Lenkwelle (3) ein Fluid in dem Kreislauf fördert, wobei mittels dem Drosselelement ein veränderbarer Strömungswiderstand erzeugbar ist. Um insbesondere einen kompakten Aufbau zu gewährleisten ist vorgesehen, dass die Pumpe einen auf zwei konzentrisch zueinander angeordnete Hydraulikammern (8,9) wirkenden Kolben (4) umfasst.

## Beschreibung

Die Erfindung betrifft eine Vorrichtung zur Gabe eines haptisch erfahrbaren Signals auf eine Lenkwelle eines Fahrzeugs, gekennzeichnet durch einen hydraulischen Kreislauf umfassend eine Pumpe und ein ansteuerbares Drosselelement, wobei die mit der Lenkwelle bewegungsgekoppelte Pumpe bei Drehung der Lenkwelle ein Fluid in dem Kreislauf fördert, wobei mittels dem Drosselelement ein veränderbarer Strömungswiderstand erzeugbar ist.

Es ist bekannt, über ein Lenkrad haptisch erfahrbare Signale zu geben, die den Bediener beispielsweise in bestimmten Situationen warnen oder informieren sollen. Hierzu werden entsprechende Vibratoren verwendet, die entweder lenkradseitig verbaut sind und ein Signal geben, oder die unter Verwendung eines Motors ein Moment an die Lenkwelle geben, welches seinerseits lenkradseitig als Vibrationssignal erfasst werden kann. Jedoch werden mitunter nicht nur Warnsignale übertragen, sondern gegebenenfalls auch aktive Lenkeingriffe vorgenommen, d. h., dass über einen solchen Motor einen der Lenkverdrehung entgegenwirkendes Gegendrehmoment erzeugt wird, um gegebenenfalls bis zu einem gewissen Grad zurückzulenken und das Fahrzeug zu führen.

Aus der nachveröffentlichten deutschen Patentanmeldung DE 10 2010 044 540.1 ist bekannt, haptisch erfahrbare Signale dadurch zu erzeugen, dass ein Motor zur Gabe eines über die Lenkwelle als haptisches Signal erfahrbaren Moments an die Lenkwelle vorgesehen ist, wobei die Motorabtriebswelle parallel zur Lenkwelle verläuft und über ein Getriebe mit dieser gekoppelt ist.

Aus der nachveröffentlichten deutschen Patentanmeldung DE 10 2011 007 014.1 ist eine Vorrichtung zur Gabe eines haptisch erfahrbaren Signals auf eine Lenkwelle eines Fahrzeugs bekannt, die gattungsgemäß einen hydraulischen Kreislauf mit einer Pumpe und einem Drosselelement umfasst, wobei eine Lenkwelle mit der Pumpe derart bewegungsgekoppelt ist, dass eine Drehung der Lenkwelle ein Fluid in dem Kreislauf fördert und das ansteuerbare Drosselelement den Strömungswiderstand in dem hydraulischen Kreislauf verändern kann.

### Aufgabe der Erfindung

Der Erfindung liegt die Aufgabe zugrunde, ein verbesserte, gattungsgemäße Vorrichtung zu schaffen, die insbesondere einen sehr kompakten und aus wenigen Bauteilen bestehenden Aufbau mit hoher Stabilität besitzt und die einfach und kostengünstig hergestellt werden kann.

### Zusammenfassung der Erfindung

Diese Aufgabe wird erfindungsgemäß durch die Merkmale des unabhängigen Anspruchs gelöst. Demzufolge ist eine gattungsgemäße Vorrichtung dadurch gekennzeichnet, dass die Pumpe einen auf zwei konzentrisch zueinander angeordnete Hydraulikammern wirkenden Kolben umfasst.

Die Drehung eines mit der Lenkwelle drehfest verbundenen bzw. verbindbaren Lenkrades versetzt die mit der Lenkwelle bewegungsgekoppelte Pumpe in Aktion. So kann durch die Drehung der Lenkwelle eine Linearbewegung (Hubbewegung) des Kolbens bewirkt werden und das in den Hydraulikkammern befindliche Fluid durch den Hydraulikkreislauf gepumpt werden. Durch das Drosselelement kann dabei ein veränderbarer Strömungswiderstand erzeugt werden, indem eine Querschnittsveränderung im Hydraulikreislauf verursacht wird.

Das Drosselelement (z.B. Proportionalventil) kann vorzugsweise mit einer Steuerungseinrichtung verbunden werden, die wiederum mit einem Drehwinkelsensor, welcher an der Lenkwelle angeordnet ist, verbunden werden kann und hierüber die Signale, welche von dem Drehwinkelsensor aufgrund der Drehung der Lenkwelle erfasst werden, empfängt.

Bedingt durch die Querschnittsverengung in der Fluidleitung ändert sich durch den erhöhten Durchflusswiderstand der Volumenstrom des Fluids in dem hydraulischen Kreislauf, in Abhängigkeit vom am Ventil gegebenen Druckgefälle. Somit wird eine Regulierung des Gesamtflusses des verwendeten Fluids ermöglicht. Mit Hilfe der alternierenden Änderung des Strömungswiderstandes kann somit ein haptisches Signal erzeugt werden, das an der Lenkwelle spürbar bzw. über die Lenkwelle an das Lenkrad übertragbar ist.

Bereits durch den hydraulischen Kreislauf lässt sich ein kompakter und kostengünstiger Aufbau realisieren, der es ermöglicht, das haptische Signal gleichmäßig zu erzeugen und als eine haptisch fühlbare Rückmeldung über das Lenkrad an den Bediener zu vermitteln.

Die Erfindung beruht auf der Erkenntnis, dass die obige Aufgabe durch den Einsatz einer zweiseitig wirkenden Kolbenpumpe gelöst werden kann. Der Aufbau der erfindungsgemäßen Vorrichtung ist daher äußerst kompakt und zeichnet sich durch wenige Bauteile aus. Die beiden axial durch den Kolben getrennten Hydraulikkammern werden über den Kolben komplett gegeneinander druckdicht abgedichtet. Die koaxial angeordneten Hydraulikkammern sorgen für einen symmetrischen Kraftfluss und ermöglichen somit eine steife Konstruktion mit hoher Stabilität.

Vorzugsweise werden die Hydraulikkammern umfänglich durch eine zylindrische Mantelfläche nach radial außen hin begrenzt, wobei der Durchmesser dieser Mantelflächen der zwei Hydraulikkammern gleich oder zumindest annähernd gleich ist. Bevorzugte Ausführungsformen sind in den Unteransprüchen angegeben.

So kann vorgesehen sein, dass die zwei Hydraulikkammern durch den hydraulischen Kreislauf über das Drosselelement verbunden sind. Hierfür weist jede Hydraulikkammer einen eigenen Anschluss auf (z.B. Bohrung), an dem eine Hydraulikleitung, z.B. ein Schlauch oder ein Rohr, angeschlossen werden kann.

Eine weitere Reduzierung der Bauteile und ein noch kompakterer Aufbau kann erreicht werden, indem der Kolben und die Hydraulikammern in einem Gehäuse aufgenommen sind und die Lenkwelle in dem Gehäuse gelagert ist. Insbesondere wenn die Lenkwelle koaxial und konzentrisch zu dem Kolben angeordnet ist und diesen axial durchdringt, kann die Lagerung der Lenkwelle auch die Lagerung des Kolbens darstellen. Möglich ist, dass die Lenkwelle in dem Gehäuse durch zwei axial beidseitig des Kolbens angeordnete Lager gelagert ist. Hierbei handelt es sich vorzugsweise um Wälzlager wobei grundsätzlich auch Gleitlager denkbar sind. Als Wälzlager können Radialwälzlager und/oder Axialwälzlager verwendet werden. In einer bevorzugten Ausführungsform werden zwei Kegelrollenlager eingesetzt, z.B. in O-Anordnung oder in X-Anordnung. Eine kompakte und einfach zu montierende Vorrichtung ergibt sich, indem das Gehäuse einen hohlzylindrischen Abschnitt und zwei Gehäusedeckel aufweist und die Lager, z.B. Wälzlager, in den Gehäusedeckeln sitzen.

Eine weitere Ausführungsform ist gekennzeichnet durch Mittel, vorzugsweise mechanische Mittel, zum Umwandeln einer Drehbewegung der Lenkwelle in eine Hubbewegung des Kolbens. Hierbei kann es sich beispielsweise um eine Gewindespindel, z.B. Trapezgewindespindel, ein Feingewinde oder einen Kugelgewindetrieb (KGT) handeln. Grundsätzlich denkbar wären auch z.B. hydraulische Mittel zum Umwandeln einer Drehbewegung der Lenkwelle in eine Hubbewegung des Kolbens.

Gemäß einer Ausführungsform ist vorgesehen, dass die Lenkwelle konzentrisch und koaxial zu dem Kolben angeordnet ist. Vorzugsweise ist dabei weiter vorgesehen, dass die Lenkwelle den Kolben axial zumindest teilweise durchdringt. Vorstellbar ist insbesondere, dass die Lenkwelle den Kolben vollständig durchdringt. Die Lenkwelle kann einteilig oder mehrteilig ausgeführt sein.

Sofern die Vorrichtung ein Gehäuse zur Aufnahme des Kolbens und der Hydraulikammern aufweist, kann vorgesehen werden, dass sich die Mittel zum Umwandeln einer Drehbewegung der Lenkwelle in eine Hubbewegung des Kolbens innerhalb des Gehäuses befinden, was den benötigten Bauraum der Vorrichtung weiter reduziert.

Eine weitere zweckmäßige Weiterbildung der Erfindung sieht vor, in den Kreislauf einen Druckbehälter und/oder einen Ausgleichsbehälter zu integrieren. Der Druckbehälter ermöglicht es, einem etwaigen Druckabfall, beispielsweise verursacht durch eine Leckage, entgegenzuwirken. Der Ausgleichsbehälter kann ebenso der Stabilisierung des hydraulischen Kreislaufs dienen, indem der Ausgleichsbehälter durch temperaturbedingte Ausdehnung, Verdunstung oder Verdampfung des Fluids dessen Verlust kompensiert.

Der Druckbehälter kann mit einem Schaltventil in dem hydraulischen Kreislauf angeordnet sein und über dieses Schaltventil in den Kreislauf geschaltet werden. Entsprechendes gilt für den Ausgleichsbehälter.

Weiterhin kann vorgesehen sein, dass ein Lenkwinkelsensor integriert ist, der die Drehung der Lenkwelle erfasst und absolutkodierte elektronische Signale, die den aktuellen Lenkwinkel wiedergeben, zur Verfügung stellt, die über eine Kabelverbindung an eine nachgeschaltete Steuereinrichtung gegeben werden, die darauf gestützt beispielsweise ein Lenkgetriebe steuert.

Die erfindungsgemäße Vorrichtung kann überall dort in Fahrzeugen eingesetzt werden, wo eine haptische Rückmeldung über den Lenkwinkel gewünscht wird, z.B. in landwirtschaftlichen Fahrzeugen, in Flurförderfahrzeugen, in Lastkraftwagen, in Personenkraftwagen, in Schiffen (sowohl direkte Lenkung eines Ruders als auch Lenkung mittels eines POD) sowie in Luftfahrzeugen.

### Kurze Beschreibung der Zeichnungen

Die Erfindung wird im Folgenden unter Bezugnahme auf die anliegenden Zeichnungen näher beschrieben. Diese zeigen
- Fig. 1: einen Axialschnitt einer erfindungsgemäßen Vorrichtung und
- Fig. 2: einen Axialschnitt der erfindungsgemäßen Vorrichtung aus Fig. 1 gemäß der Schnittachse B-B.

### Detaillierte Beschreibung der Zeichnung

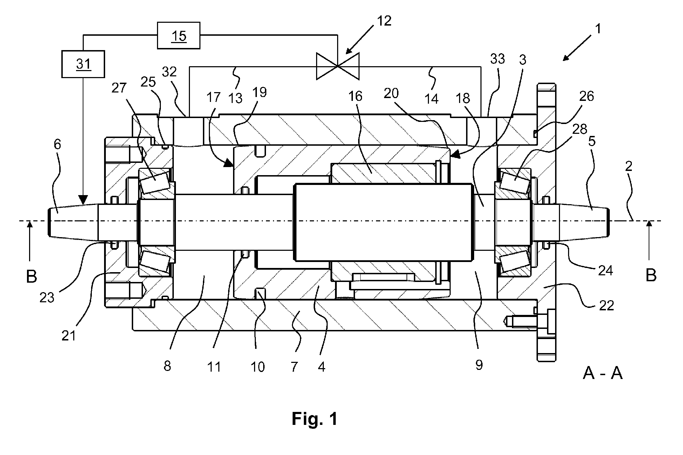

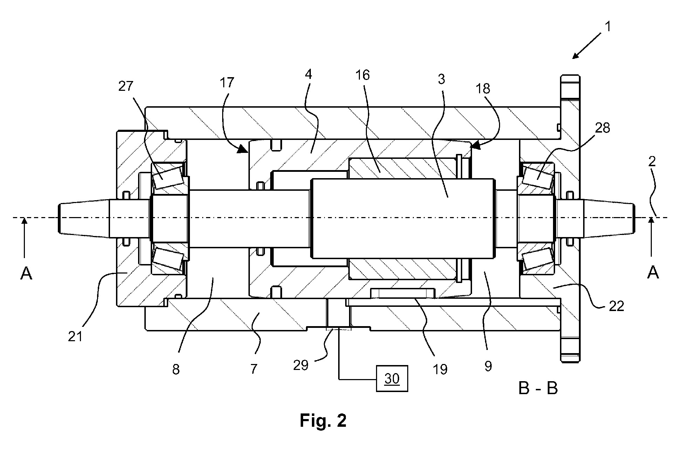

Die Fig. 1 und 2 zeigen ein Ausführungsbeispiel der erfindungsgemäßen Vorrichtung 1 in einem Axialschnitt, d.h. eine Schnittdarstellung umfassend die Rotationsachse 2 der Lenkwelle 3. Da die Lenkwelle 3 koaxial und konzentrisch zu dem Kolben 4 angeordnet ist, ist die Rotationsachse 2 gleichermaßen die Rotationsachse des Kolbens 4.

Die Lenkwelle 3 weist ein erstes Ende 5 auf, mit dem ein beispielsweise ein nicht dargestelltes Lenkrad drehfest verbunden werden kann. An dem axial gegenüberliegenden zweiten Ende 6 der Lenkwelle 3 kann diese mit einem nicht dargestellten Lenkmechanismus, der beispielsweise mechanisch auf zu lenkende Räder eines Fahrzeuges einwirkt, verbunden werden.

Die in dem hydraulischen Kreislauf wirkende Pumpe wird durch den Kolben 4 sowie ein diesen umfänglich begrenzendes, zylindrisches Gehäuseelement 7 gebildet. Durch den Kolben 4 werden in dem zylindrischen Gehäuseelement 7 zwei Hydraulikammern 8, 9 gebildet. Die beiden Hydraulikammern 8, 9 sind konzentrisch zueinander angeordnet und werden jeweils durch das zylindrische Gehäuseelement 7 radial nach außen begrenzt, weisen also einen gleichen Außendurchmesser auf. Durch eine Dichtung 10 gegenüber dem zylindrischen Gehäuseelement 7 sowie eine Dichtung 11 gegenüber der Lenkwelle 3 trennt der Kolben 4 die zwei Hydraulikammern 8, 9 in dem zylindrischen Gehäuseelement 7, so dass innerhalb des zylindrischen Gehäuseelements 7 kein Fluid zwischen den Hydraulikammern 8, 9 strömen kann.

Der hydraulische Kreislauf umfasst neben der Pumpe und den zwei Hydraulikammern 8, 9 ein Drosselelement, welches durch ein Ventil 12 gebildet wird, sowie Leitungen 13, 14 zum Verbinden der Hydraulikammern 8, 9 über das Drosselelement. Diese Leitungen 13, 14 sind durch Bohrungen 32, 33 mit den Hydraulikammern 8, 9 verbunden.

Das Drosselelement kann über eine Steuerungseinrichtung 15 angesteuert werden, um den Strömungswiderstand innerhalb des hydraulischen Kreislaufes zu verändern.

Die Pumpe, genauer gesagt der Kolben 4, ist über einen schematisch dargestellten Gewindetrieb 16 mit der Lenkwelle 3 bewegungsgekoppelt. Es handelt sich bei dem Gewindetrieb 16 um ein rein mechanisches Mittel zum Umwandeln einer Drehbewegung der Lenkwelle 3 in eine Hubbewegung des Kolbens 4. Vorzugsweise wirkt ein derartiges Mittel - wie in diesem Ausführungsbeispiel der Fall - ausschließlich zwischen der Lenkwelle 3 und dem Kolben 4, ist also z.B. radial zwischen der Lenkwelle 3 und dem Kolben 4 angeordnet.

Der Kolben 4 weist einen im Wesentlichen U-förmigen oder topfförmigen Querschnitt auf, wobei an einem ersten axialen Ende 17 eine Bohrung zur Aufnahme der den Kolben 4 durchdringenden Lenkwelle 3 vorhanden ist. An einem zweiten axialen Ende 18 des Kolbens 4 ist dieser radial weiter zurückgenommen, um das Mittel zum Umwandeln einer Drehbewegung der Lenkwelle 3 in eine Hubbewegung des Kolbens 4 aufnehmen zu können.

Über eine Nut-Feder-Verbindung 19 ist der Kolben 4 drehfest zum zylindrischen Gehäuseelement 7 festgelegt.

Der Kolben 4 weist zur einfacheren Montage an seinen axialen Enden Abschrägungen 19, 20 einer Außenmantelfläche auf.

Die durch das zylindrische Gehäuseelement 7 radial begrenzten Hydraulikkammern 8, 9 werden axial jeweils durch Gehäusedeckel 21, 22 abgeschlossen. Gegenüber der das komplette Gehäuse (zylindrisches Gehäuseelement 7, Gehäusedeckel 21 und Gehäusedeckel 22) durchdringenden Lenkwelle 3 sind die Gehäusedeckel 21, 22 mittels Dichtungen 23, 24 druckdicht abgedichtet. Weitere Dichtungen 25, 26 sind zwischen den Gehäusedeckeln 21, 22 und dem zylindrischen Gehäuseelement 7 vorgesehen.

Die Lenkwelle 3 ist durch zwei axial beidseitig des Kolbens 4 positionierte Wälzlager 27, 28 drehbar im dem Gehäuse 7, 21, 22 gelagert. Indem der Kolben 4 auf der Lenkwelle 3 sitzt, ist auch dieser durch die Wälzlager 27, 28 in dem Gehäuse 7, 21, 22 gelagert.

Die Wälzlager 27, 28 sind Kegelrollenlager, die in X-Anordnung eingebaut wurden. Jeweils ein Wälzlager 27, 28 ist in einem Gehäusedeckel 21, 22, insbesondere in einem Absatz des Gehäusedeckels 21, 22, außenumfänglich gehalten.

Über eine weitere Bohrung 29 in dem zylindrischen Gehäuseelement 7 kann eine Hydraulikkammer 9 mit einem Druck- und/oder Ausgleichsbehälter 30 verbunden sein.

Ein schematisch dargestellter Drehwinkelsensor 31 greift ein Signal der Lenkwelle 3 ab, um dieses der Steuerungseinrichtung 15 zuzuführen, so dass in Abhängigkeit der Verdrehung der Lenkwelle 3 die Drosseleinheit angesteuert werden kann. In diesem Ausführungsbeispiel sitzt der Drehwinkelsensor 31 außerhalb des Gehäuses 7, 21, 22, nämlich am zweiten Ende 6 der Lenkwelle 3. Möglich ist jedoch auch, dass der Drehwinkelsensor 31 innerhalb des Gehäuses 7, 21, 22 angeordnet ist. Denkbar ist auch, dass der Drehwinkelsensor 31 an einem der Wälzlager 27, 28 angeordnet ist bzw. in eines dieser Wälzlager 27, 28 integriert ist.

### Bezugszeichenliste

- 1: Vorrichtung
- 2: Rotationsachse
- 3: Lenkwelle
- 4: Kolben
- 5: erstes Ende der Lenkwelle
- 6: zweites Ende der Lenkwelle
- 7: zylindrisches Gehäuseelement
- 8: Hydraulikkammer
- 9: Hydraulikkammer
- 10: Dichtung
- 11: Dichtung
- 12: Ventil
- 13: Leitung
- 14: Leitung
- 15: Steuerungseinrichtung
- 16: Gewindetrieb
- 17: erstes axiales Ende des Kolbens
- 18: zweites axiales Ende des Kolbens
- 19: Abschrägung
- 20: Abschrägung
- 21: Gehäusedeckel
- 22: Gehäusedeckel
- 23: Dichtung
- 24: Dichtung
- 25: Dichtung
- 26: Dichtung
- 27: Wälzlager
- 28: Wälzlager
- 29: Bohrung

- 30: Druck- und/oder einen Ausgleichsbehälter

- 31: Drehwinkelsensor
- 32: Bohrung

- 33: Bohrung

## Patentansprüche

1. Vorrichtung (1) zur Gabe eines haptisch erfahrbaren Signals auf eine Lenkwelle (3) eines Fahrzeugs, **gekennzeichnet durch** einen hydraulischen Kreislauf umfassend eine Pumpe und ein ansteuerbares Drosselelement, wobei die mit der Lenkwelle (3) bewegungsgekoppelte Pumpe bei Drehung der Lenkwelle (3) ein Fluid in dem Kreislauf fördert, wobei mittels dem Drosselelement ein veränderbarer Strömungswiderstand erzeugbar ist, **dadurch gekennzeichnet,** dass die Pumpe einen auf zwei konzentrisch zueinander angeordnete Hydraulikammern (8,9) wirkenden Kolben (4) umfasst.

2. Vorrichtung (1) nach Anspruch 1, **dadurch gekennzeichnet, dass** die zwei Hydraulikkammern (8,9) durch den hydraulischen Kreislauf über das Drosselelement verbunden sind.

3. Vorrichtung (1) nach Anspruch 1 oder 2, **dadurch gekennzeichnet, dass** der Kolben (4) und die Hydraulikammern (8,9) in einem Gehäuse (7,21,22) aufgenommen sind und dass die Lenkwelle (3) in dem Gehäuse (7,21,22) gelagert ist.

4. Vorrichtung (1) nach Anspruch 3, **dadurch gekennzeichnet, dass** die Lenkwelle (3) in dem Gehäuse (7,21,22) durch zwei axial beidseitig des Kolbens (4) angeordnete Lager, insbesondere Wälzlager (27,28), gelagert ist.

5. Vorrichtung (1) nach Anspruch 4, **dadurch gekennzeichnet, dass** das Gehäuse (7,21,22) einen hohlzylindrischen Abschnitt (7) und zwei Gehäusedeckel (21,22) aufweist und dass die Lager, insbesondere Wälzlager (27,28), in den Gehäusedeckeln (21,22) sitzen.

6. Vorrichtung (1) nach einem der vorangegangenen Ansprüche, **gekennzeichnet durch** Mittel, vorzugsweise mechanische Mittel, zum Umwandeln einer Drehbewegung der Lenkwelle (3) in eine Hubbewegung des Kolbens (4).

7. Vorrichtung (1) nach einem der vorangegangenen Ansprüche, **dadurch gekennzeichnet, dass** die Lenkwelle (3) konzentrisch und koaxial zu dem Kolben (4) angeordnet ist

8. Vorrichtung (1) nach Anspruch 7, **dadurch gekennzeichnet, dass** die Lenkwelle (3) den Kolben (4) axial zumindest teilweise durchdringt.

9. Vorrichtung (1) nach Anspruch 8, **dadurch gekennzeichnet, dass** die Mittel zum Umwandeln einer Drehbewegung der Lenkwelle (3) in eine Hubbewegung des Kolbens (4) durch eine Gewindespindel oder einen Kugelgewindetrieb gebildet werden.

10. Vorrichtung (1) nach Anspruch 3 in Verbindung mit einem der Ansprüche 6 bis 9, **dadurch gekennzeichnet, dass** sich die Mittel zum Umwandeln einer Drehbewegung der Lenkwelle (3) in eine Hubbewegung des Kolbens (4) innerhalb des Gehäuses (7,21,22) befinden.
